# EUROPÄISCHE PATENTSCHRIFT

(11) **EP 3 416 753 B1**
(45) Veröffentlichungstag und Bekanntmachung des Hinweises auf die Patenterteilung: **08.04.2020**
(21) Anmeldenummer: 17703433.7
(22) Anmeldetag: 08.02.2017
(51) Int. Cl.: B05D 5/00, C09D 7/00, B05D 7/14, B05D 7/00, C08G 18/10, C08G 18/42, C08G 18/76, C08L 75/06, C09D 175/06, C09D 167/00

(54) **VERWENDUNG VON NIEDERMOLEKULAREN CARBONSÄUREN IN WÄSSRIGEN BASISLACKEN**
USE OF LOW MOLECULAR WEIGHT CARBOXYLIC ACIDS IN AQUEOUS BASE PAINTS
UTILISATION D'ACIDES CARBONIQUES SOUS-MOLECULAIRES DANS DES VERNIS EN BASE AQUEUSE

(30) Priorität: 18.02.2016 EP 16156227
(43) Veröffentlichungstag der Anmeldung: 26.12.2018
(73) Patentinhaber: BASF Coatings GmbH, 48165 Münster (DE)
(72) Erfinder: STEINMETZ, Bernhard, 48165 Münster (DE); JANKOWSKI, Peggy, 97080 Wuerzburg (DE)
(74) Vertreter: BASF IP Association
(86) Internationale Anmeldenummer: PCT/EP2017/052676
(87) Internationale Veröffentlichungsnummer: WO 2017/140539

(56) Entgegenhaltungen:
- EP-A1- 2 840 101
- EP-A1- 2 963 073
- WO-A1-2014/044811

## Beschreibung

Die vorliegende Erfindung betrifft die Verwendung spezifischer niedermolekularer Carbonsäuren in wässrigen Basislacken zur Verbesserung der Zwischenschichthaftung.

Basislacke sind in der Automobillackierung und der Industrielackierung übliche Farb- und/oder effektgebende Zwischenbeschichtungsstoffe. Die Basislackschicht wird durch eine darüber angeordnete Klarlackschicht abgedeckt, die die Basislackierung vor Witterungseinflüssen, mechanischen und chemischen Angriffen schützt. Der Basislack und der Klarlack werden üblicherweise nass-in-nass aufgetragen und durch Einbrennen gemeinsam gehärtet.

Während früher bei der Automobillackierung auf die mit einem Elektrotauchlack beschichtete Karosserie vor dem Basislack zunächst ein Füller aufgebracht und anschließend separat eingebrannt wurde, wird in neueren Lackieranlagen unter Verwendung teils entsprechend angepasster Beschichtungsmittel auf das separate Einbrennen verzichtet. Stattdessen erfolgt ein gemeinsames Einbrennen aller auf die Elektrotauchlackierung aufgetragenen Lackschichten. Ziel ist hierbei insbesondere die energieeffizientere Prozessführung.

Selbstverständlich ist es in allen oben beschriebenen Prozessführungen ebenfalls möglich, auch mehr als eine Basislackschicht aufzutragen, um hierdurch beispielsweise bestimmte Farbeffekte zu erzielen.

Ein wesentliches Qualitätskriterium von Lackierungen ist die Haftung der gehärteten Beschichtungsmittel auf dem beschichteten Substrat. Im Falle von wie oben beschriebenen Mehrschichtlackierungen, wie sie beispielsweise bei der Automobillackierung üblich sind, kommt außerdem der Haftung zwischen den einzelnen Lackschichten, der sogenannten Zwischenschichthaftung, eine große Bedeutung zu. Eine Bestimmung der Zwischenschichthaftung kann beispielsweise durch die Gitterschnittprüfung nach DIN EN ISO 2409:2013-6 erfolgen.

Aus der Patentanmeldung WO 03/011986 A1 ist es bekannt, zur Verbesserung der Zwischenschichthaftung den zur Herstellung einer Mehrschichtlackierung verwendeten Überzugsmitteln als Haftvermittler beispielsweise anorganische Phosphorsäuren oder Borsäure und/oder andere Borverbindungen zuzusetzen.

Bei der industriellen Lackierung von beispielsweise Automobilien durchlaufen die beschichteten Werkstücke eine Ofentrocknungsanlage, in der die aufgebrachten Überzugsmittel durch die Zufuhr von thermischer Energie gehärtet werden. Bei den heute weit verbreiteten Metallic-Lackierungen werden beispielsweise der Metallic-Basislack und der abschließende Klarlack nass-in-nass aufgebracht und gemeinsam gehärtet.

Bei der Ofentrocknung beeinflussen sich die Parameter Einbrenndauer und Einbrenntemperatur gegenläufig, das heißt bei höherer Temperatur verkürzt sich die Einbrenndauer und bei längerer Einbrenndauer ist eine niedrigere Temperatur erforderlich, um eine optimal Härtung der Lackierung zu erzielen. Durch rein statistisch immer wieder auftretende Störungen in der Trocknungsanlage, beispielsweise durch einen Stillstand der Transportvorrichtung, kann es dazu kommen, dass die Werkstücke in Hinblick auf die gegebene Temperatur zu lange in der Ofentrocknungsanlage verbleiben. Hierbei kann es zu dem sogenannten Überbrennen kommen. Unter Überbrennen versteht man das Einbrennen eines Beschichtungsstoffes mit höherer Energiezufuhr als für eine vollständige Vernetzung notwendig ist. Dies kann durch eine Überschreitung der Einbrennzeit und/oder der Einbrenntemperatur verursacht werden. Beim Überbrennen können bereits vorhandene Vernetzungen der Moleküle untereinander wieder abgebaut werden, es bilden sich dann Spaltprodukte. Es kann auch eine stärkere Vernetzung als gewünscht beim Überbrennen eintreten. Die geforderte Beständigkeit einer Lackschicht wird dann in aller Regel nicht erreicht. Das Überbrennen führt unter anderem zu Versprödung oder Vergilbung des Lackfilms (Römpp Lexikon Lacke und Druckfarben, Georg Thieme Verlag, 10. Auflage, 1998, S. 585).

Es ist davon auszugehen, dass ein Überbrennen eintritt, wenn die für einen Lack vorgegebene Einbrennzeit um 20 % oder mehr und/oder die vorgegebene Einbrenntemperatur um 5°C insbesondere 10°C oder mehr überschritten werden.

Aufgrund lackierprozessüblicher Lackierungsfehler, wie beispielsweise Schmutz, Nadelstichen oder Kratern, ist in manchen Fällen auch im Bereich der Originallackierung (Erstlackierung) die erneute Lackierung der Werkstücke erforderlich. Es handelt sich also um eine im Rahmen der OEM-Lackierung zur Anwendung gebrachte Doppellackierung. Dabei wird in der Regel auf die fertiggestellte, aber fehlerhafte Erstlackierung, ein zweiter Aufbau aus mindestens einer Basislackschicht und Klarlackschicht aufgebracht.

Aus oben Gesagtem folgt somit, dass es bereits aus statistischen Gründen im Rahmen der OEM-Lackierung unvermeidbar ist, dass OEM-erstlackierte Werkstücke, bei denen als oberste Schicht der Mehrschichtlackierung eine überbrannte Klarlackschicht vorhanden ist, erneut lackiert werden müssen, das heißt einer Doppellackierung unterzogen werden müssen. In dem dann resultierenden Aufbau ist also eine Basislackschicht direkt auf der zuvor aufgebrachten und überbrannten Klarlackschicht angeordnet. Zum Abschluss wird wiederum eine Klarlackschicht hergestellt.

Selbstverständlich ist ein entsprechender Aufbau, das heißt ein Aufbau, bei dessen Herstellung mindestens eine Basislackschicht direkt auf einer überbrannten Klarlackschicht aufgebracht wird, bevor dann direkt auf die Basislackschicht oder die oberste Basislackschicht wiederum eine Klarlackschicht aufgebracht wird, auch im Rahmen der Reparaturlackierung sehr häufig anzutreffen.

Es wurde nun gefunden, dass sich sowohl im Herstellerwerk als auch in Reparaturlackierwerkstätten bei Aufbringung eines Basislacks und eines Klarlacks auf eine bereits vorhandene gehärtete Klarlackschicht regelmäßig eine außerordentlich schlechte Zwischenschichthaftung ergibt, wenn der bereits gehärtete Klarlack überbrannt ist.

Es ist Aufgabe der vorliegenden Erfindung, die Zwischenschichthaftung auf einer bereits gehärteten, überbrannten Klarlackschicht beim Aufbringen eines weiteren Basislacks zu verbessern.

Überraschenderweise wurde gefunden, dass diese Aufgabe durch den Zusatz von spezifischen Aromat-basierten Carbonsäuren zu dem Basislack, der direkt auf die Klarlackschicht appliziert wird, gelöst werden kann.

Gegenstand der vorliegenden Erfindung ist daher die Verwendung von aromatischen und araliphatischen (gemischt-aromatisch-aliphatischen) Carbonsäuren in wässrigen Basislacken zur Verbesserung der Haftung dieser Lacke auf überbrannten Klarlacken.

Vorteilhaft enthalten die Basislacke 0,1 bis 5 Gew.-% aromatische und/oder araliphatische Carbonsäuren, bezogen auf die Gesamtmenge des wässrigen Basislacks (das heißt des Basislacks, wie er vor dem Aufbringen auf das Substrat vorliegt). Gehalte von weniger als 0,1 Gew.-% zeigen zum Teil keine ausreichende Wirkung. Ist der Gehalt an höher als 5 Gew.-%, können Störungen in der nach der Härtung resultierenden Lackschicht auftreten.

Besonders vorteilhaft beträgt der Gehalt des wässrigen Basislacks an aromatischen und/oder araliphatischen Carbonsäuren von 0,3 bis 1,5 Gew.-%, bezogen auf die Gesamtmenge des wässrigen Basislacks. Bevorzugt wird genau eine entsprechende Carbonsäure im jeweiligen wässrigen Basislack eingesetzt.

Als aromatische und araliphatische Carbonsäuren können letztlich alle dem Fachmann in dieser Hinsicht bekannten Komponenten eingesetzt werden.

Der Begriff aromatisch beschreibt dabei im Rahmen der vorliegenden Erfindung jede organische Verbindung oder einen Molekülteil einer organischen Verbindung, die oder der aus einem cyclischen, planaren aromatischen Ringsystem, das heißt einem mindestens eine Ringstruktur aufweisenden durchkonjugierten π-System entsprechend den Aromatizitätskriterien nach Hückel, besteht. Eine aromatische Monocarbonsäure besteht demnach aus einem aromatischen Rest (dem aromatischen Molekülteil) und einer Carbonsäuregruppe, während eine aromatische Dicarbonsäure aus einen aromatischen Rest und zwei Carbonsäuregruppen besteht. Die mindestens eine Carbonsäuregruppe ist also direkt an das aromatische System angeknüpft und ist somit Teil des konjugierten π-Systems. Beispielhaft sei Benzoesäure genannt.

Der Begriff araliphatisch beschreibt demnach eine organische Verbindung oder einen Molekülteil einer organischen Verbindung, die oder der aus mindestens einem aromatischen und mindestens einem aliphatischen Molekülteil besteht. Der aliphatische Teil kann dabei beispielsweise ein ausschließlich aus Kohlenstoff und Wasserstoff bestehender Rest sein, insbesondere ein Alkyl- oder Alkylenrest. Eine araliphatische Carbonsäure besteht demnach aus einem araliphatischen Rest (dem araliphatischen Molekülteil) und einer Carbonsäuregruppe. Beispielhaft seien Toluylsäuren genannt.

Bevorzugt handelt es sich bei den Carbonsäuren um Monocarbonsäuren.

Bevorzugt sind im Rahmen der vorliegenden Erfindung aromatische und araliphatische Monocarbonsäuren mit 7 bis 15, ganz besonders bevorzugt 7 bis 8 Kohlenstoffatomen. Darunter nochmals bevorzugt sind solche Monocarbonsäuren, die neben der Carbonsäuregruppe ausschließlich aus Wasserstoff und Kohlenstoff bestehen. Beispielhaft genannt seien Benzoesäure und Toluylsäuren, beispielsweise para- oder ortho-Toluylsäure.

Abhängig vom pH-Wert des wässrigen Basislacks (Wasserbasislacks) können die Carbonsäuren natürlich anteilig oder vollständig in deprotonierter Form, das heißt anionisch, vorliegen.

Die bei der erfindungsgemäßen Verwendung einsetzbaren Basislacke und Klarlacke weisen abgesehen von der Tatsache, dass in den Basislacken jedenfalls mindestens eine aromatische und/oder araliphatische Carbonsäure vorhanden ist, keine Besonderheiten auf. Es können die üblichen wässrigen Basislacke und die üblichen Klarlacke eingesetzt werden.
Bekanntermaßen und wie auch schon weiter oben angegeben, handelt es sich bei Basislacken um beispielsweise in der Automobillackierung und allgemeinen Industrielackierung eingesetzte farbgebende Zwischenbeschichtungsstoffe. Ein Basislack enthält also jedenfalls mindestens ein Pigment, das heißt mindestens ein an sich bekanntes farb- und/oder effektgebendes Pigment.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Die erfindungsgemäß zu verwendenden wässrigen Basislacke enthalten besonders bevorzugt mindestens ein Polymer als Bindemittel, insbesondere mindestens ein Polymer ausgewählt aus der Gruppe bestehend aus Polyurethanen, Polyestern, Poly(meth)acrylaten und/oder Mischpolymerisaten der genannten Polymere, insbesondere bevorzugt jedenfalls, aber nicht zwingend ausschließlich, mindestens ein Polyurethan-Poly(meth)acrylat. Nochmals bevorzugt sind wässrige Basislacke, die mindesten ein hydroxygruppenhaltiges Polymer aus der oben genannten Gruppe als Bindemittel enthalten. Möglich ist dabei insbesondere im letztgenannten Fall, dass zudem als Vernetzungsmittel mindestens ein Aminoplastharz und/oder ein blockiertes oder unblockiertes Polyisocyanat, bevorzugt ein Aminoplastharz, enthalten ist. Unter den Aminoplastharzen sind Melaminharze bevorzugt.

Darüber hinaus kann der wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von den oben beschriebenen Polymeren verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Enthalten sein können auch Verdicker wie anorganische Verdicker aus der Gruppe der Schichtsilikate oder organische Verdicker wie (Meth)acrylsäure-(Meth)acrylat-Copolymerisat-Verdicker oder auch Polyurethanverdicker, welche von den eingesetzten Bindemitteln verschieden sind.

Der erfindungsgemäß zu verwendende Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

Gegenstand der vorliegenden Erfindung ist auch ein Verfahren zur Herstellung einer mehrschichtigen Lackierung, bei dem
(1) ein mit einer gehärteten Mehrschichtlackierung beschichtetes Substrat bereitgestellt wird, wobei die oberste Schicht der Mehrschichtlackierung eine überbrannte Klarlackschicht ist,
(2) ein wässriger Basislack enthaltend mindestens eine organische Carbonsäure mit 1 bis 10 Kohlenstoffatomen direkt auf die überbrannte Klarlackschicht aus (1) aufgebracht wird und aus dem aufgebrachten Basislack ein Polymerfilm gebildet wird,
(3) auf die unter (2) erhaltene Basislackschicht ein Klarlack aufgebracht wird und anschließend
(4) die Basislackschicht aus (2) und die Klarlackschicht aus (3) zusammen gehärtet werden.

Die Angabe, dass in Stufe (2) aus dem Basislack ein Polymerfilm gebildet wird, ist folgendermaßen zu verstehen. Der Lack bildet selbstverständlich nach dem Auftrag auf eine Oberfläche eine Schicht, das heißt einen Film aus. Dieser Film enthält dann die einen Lack auszeichnenden Polymere. Demnach liegt also ein Polymerfilm vor. Dieser Polymerfilm kann bereits vor Auftrag weiterer Schichten abgelüftet oder teilweise vernetzt sein, beispielsweise durch eine Zwischentrocknung. Allerdings ist der Film keinesfalls bereits vollständig gehärtet. Dies kommt auch dadurch zum Ausdruck, dass erst in Stufe (4) gehärtet wird. Wäre der Basislack bereits vor Stufe (4) gehärtet, wäre die Härtung in Stufe (4) selbstverständlich gar nicht mehr möglich.

Augenscheinlich wird bei der Stufe (2) des erfindungsgemäßen Verfahrens der wässrige Basislack direkt auf die überbrannte Klarlackschicht aufgebracht. Zwischen der so aufgebauten Basislackschicht und der darunter liegenden überbrannten Klarlackschicht sind also keine weiteren Schichten angeordnet; es besteht direkter Kontakt der Schichten.

Die Spezifizierung "direkt" fehlt im Zusammenhang mit der Stufe (3) des Verfahrens. Grund hierfür ist, dass der abschließend aufgebrachte Klarlack nicht zwingend mit der in Stufe (2) hergestellten Basislackschicht enthaltend organische Carbonsäuren mit 1 bis 10 Kohlenstoffatomen in Kontakt stehen muss, also nicht direkt auf der in Stufe (2) hergestellten Basislackschicht angeordnet sein muss. Ebenso möglich ist es, dass zwischen den beiden genannten Schichten weitere Schichten, beispielsweise weitere Basislackschichten, hergestellt werden. Selbstverständlich ist dann die Klarlackschicht ebenfalls auf der Basislackschicht aus (2) angeordnet, aber eben nicht direkt darauf. Diese weiteren Schichten werden dann zusammen in Stufe (4) mit der Basislackschicht aus Stufe (2) und der Klarlackschicht aus Stufe (3) gehärtet.

Bevorzugt umfasst das Verfahren also eine Stufe (2a) zwischen den Stufen (2) und (3), in der direkt auf die unter (2) erhaltene Basislackschicht mindestens ein weiterer Basislack aufgebracht wird und aus diesem mindestens einen weiteren Basislack ein Polymerfilm gebildet wird, wobei dann in Stufe (3) direkt auf die eine oder die oberste in Stufe (2a) hergestellte Basislackschicht ein Klarlack aufgebracht wird und anschließend in Stufe (4) die Basislackschichten aus (2) und (2a) und die Klarlackschicht aus (3) zusammen gehärtet werden. Bevorzugt ist der mindestens eine Basislack aus Stufe (2a) unterschiedlich von dem Basislack aus Stufe (2).

Als Substrate dienen die im Zusammenhang grundsätzlich bekannten Substrate, insbesondere Metall- oder Kunststoffsubstrate, wie sie im Zusammenhang mit der Automobilindustrie bekannt sind.

Hinsichtlich der auf dem Substrat angeordneten Mehrschichtlackierung kann es sich insbesondere um eine schon eingangs genannte Mehrschichtlackierung im Bereich der Automobillackierung handeln. Wichtig ist jedenfalls, dass als oberste Schicht eine überbrannte Klarlackschicht vorhanden ist.

Da wie eingangs beschrieben wurde, die vorliegende Erfindung insbesondere bevorzugt im Bereich der Doppellackierung im Rahmen der OEM-Lackierung oder im Bereich der Reparaturlackierung eingesetzt werden kann, handelt es sich bei der überbrannten Klarlackschicht aus Stufe (1) insbesondere um eine solche, die die oberste Schicht einer Mehrschichtlackierung, die Fehlstellen aufweist, darstellt.

Diese Fehlstellen können in Form von lackierprozessüblichen Lackierungsfehlern, wie Schmutzeinlagerungen, Nadelstichen oder Kratern in einer oder mehreren Lackschichten der Mehrschichtlackierung vorhanden sein. Ebenso kann es sich um durch beispielsweise mechanische Einflüsse entstandene Fehlstellen handeln.

Alle oben im Zusammenhang mit der erfindungsgemäßen Verwendung beschriebenen besonderen Ausführungsformen hinsichtlich der Carbonsäuren, bevorzugt Monocarbonsäuren, und der wässrigen Basislacke gelten selbstverständlich auch im Zusammenhang mit dem erfindungsgemäßen Verfahren.

Im Folgenden wird die Erfindung anhand von Ausführungsbeispielen näher erläutert.

### Beispiele für Lackformulierungen

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das im Rahmen der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.
Wird also für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

Alle in den Tabellen angegebenen Anteile sind Gewichtsteile.

### 1. Herstellung eines nicht erfindungsgemäßen Wasserbasislacks 1

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 115 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack 1**

| Komponente | Gewichtsteile |
|---|---|
| **Wässrige Phase** | |
| 3%ige Na-Mg-Schichtsilikatlösung | 13,8 |
| Deionisiertes Wasser | 13,72 |
| Butylglykol | 1,4 |
| Polyurethanmodifiziertes Polyacrylat; hergestellt gemäß S. 7, Z. 55 bis S.8, Z. 23 der DE 4437535 A1 | 2,8 |
| 50 Gew.-%ige Lösung Rheovis® PU 1250 (BASF) Rheologiemittel, in Butylglykol | 0,53 |
| 10 Gew.-%ige wässrige Rheovis® AS1130 Lösung; Rheologiemittel, erhältlich von BASF, in Wasser | 4,8 |
| Polyester; hergestellt gemäß EP 12182050, Seite 28, Zeile 13-33 | 2 |
| Polyester; hergestellt gemäß Beispiel D, Spalte 16, Z. 37-59 der DE-A-4009858 | 1,43 |
| Melaminformaldehydharz (Luwipal® 052 von der BASF SE) | 1,9 |
| Melaminformaldehydharz (Resimene HM2608® 052 von der Ineos) | 4,7 |
| 10%iges Dimethylethanolamin in Wasser | 1,2 |
| Polyurethan; hergestellt analog EP 1358278 B1 (Seite 14 - Zeile 38-53) | 11,5 |
| Isopropanol | 1,3 |
| 2-Ethylhexanol | 1 |
| n-Butoxypropanol | 1 |
| Triethylenglykol | 1,28 |
| Isopar® L von der Exxon Mobile | 3 |
| Byk-347® der Firma Altana | 0,53 |
| Pluriol® P 900 der Firma BASF SE | 0,7 |
| Tinuvin® 1130 der Firma BASF SE | 2,24 |
| Rotpaste | 15,5 |
| Blaupaste | 0,43 |

| Interferenzpigment-Schlämme | |
|---|---|
| Mearlin Ext. super red | 0,2 |
| Mischlack, hergestellt analog EP 1534792 B1, Spalte 11, Zeile 1-17 | 0,6 |

| **Organische Phase** | |
|---|---|
| Aluminiumpigment 1, erhältlich von Firma Altana-Eckart | 0,23 |
| Aluminiumpigment 2, erhältlich von Firma Altana-Eckart | 0,1 |
| Paliocrome Orange der Firma BASF SE | 3,56 |
| Butylglykol | 4,66 |
| Mischlack, hergestellt analog EP 1799783 A1, Seite 7, Zeile 40-47 | 3,89 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Herstellung der Rotpaste:

Die Rotpaste wurde aus 40 Gewichtsteilen einer gemäß der internationalen Patentanmeldung WO 91/15528 Bindemitteldispersion A hergestellten acrylierten Polyurethandispersion, 34,5 Gewichtsteilen Cinilex® DPP Rot, 2 Gewichtsteilen eines handelsüblichen Polyethers (Pluriol® P900 der Firma BASF SE), 3 Gewichtsteilen 1-Propoxy-2-propanol und 20,5 Gewichtsteilen deionisiertem Wasser hergestellt.

### 2. Herstellung eines erfindungsgemäßen Wasserbasislacks E1

Der Wasserbasislack E1 wurde analog Tabelle A hergestellt, wobei allerdings zusätzlich 8 Gewichtsteile einer Mischung aus 14,06 Gewichtsteilen Benzoesäure (der Firma IMCD Deutschland GmbH & Co. KG) und 102,4 Gewichtsteilen einer 10%igen Dimethylethanolamin-Lösung in deionisiertem Wasser zugesetzt wurden.

### 3. Herstellung eines erfindungsgemäßen Wasserbasislacks E2

Der Wasserbasislack E2 wurde analog Tabelle A hergestellt, wobei allerdings zusätzlich 6,4 Gewichtsteile einer Mischung aus 14,5 Gewichtsteilen Benzoesäure, 13,6 Gewichtsteilen einer 15%igen Ammoniak-Lösung in deionisiertem Wasser und 66,6 Gewichtsteilen deionisiertem Wasser zugesetzt wurden.

### 4. Herstellung eines erfindungsgemäßen Wasserbasislacks E3

Der Wasserbasislack E3 wurde analog Tabelle A hergestellt, wobei allerdings zusätzlich 8,1 Gewichtsteile einer Mischung aus 15,67 Gewichtsteilen para-Toluylsäure (CAS-Nr.: 99-94-5 der Firma Sigma-Aldrich) und 102,4 Gewichtsteilen einer 10%igen Dimethylethanolamin-Lösung in deionisiertem Wasser zugesetzt wurden.

### 5. Herstellung eines erfindungsgemäßen Wasserbasislacks E4

Der Wasserbasislack E4 wurde analog Tabelle A hergestellt, wobei allerdings zusätzlich 8,1 Gewichtsteile einer Mischung aus 15,67 Gewichtsteilen ortho-Toluylsäure (CAS-Nr.: 118-90-1 der Firma Sigma-Aldrich) und 102,4 Gewichtsteilen einer 10%igen Dimethylethanolamin-Lösung in deionisiertem Wasser zugesetzt wurden.

### Vergleich zwischen den Wasserbasislacken 1 und E1 bis E4

Zur Bestimmung der Gitterschnittbeständigkeit wurden mehrschichtige Lackierungen nach der folgenden allgemeinen Vorschrift hergestellt:
Ein mit einer gehärteten kathodischen Elektrotauchlackierung beschichtetes Stahlblech der Abmessungen 10 x 20 cm diente als Substrat.
Auf dieses Blech wurde zunächst der kommerziell von der BASF Coatings GmbH erhältliche Wasserfüller SecuBloc® MB 7 245 in einer Trockenfilmschichtdicke von etwa 20 µm appliziert und bei einer Temperatur von 70°C über einen Zeitraum von 10 Minuten zwischengetrocknet. Auf die zwischengetrocknete Wasserfüllerschicht wurden anschließend die Wasserbasislacke 1 beziehungsweise E1 bis E4 in einer Trockenfilmschichtdicke von 25 µm aufgebracht und nach 4 Minuten Ablüften bei Raumtemperatur sowie Zwischentrocknung über 10 Minuten bei 70°C der Basislacke wurde der Zweikomponentenklarlack Igloss® der Firma BASF Coatings GmbH in einer Trockenfilmschichtdicke von 40 µm appliziert. Die resultierende Klarlackschicht wurde während 20 Minuten bei Raumtemperatur abgelüftet. Anschließend wurden die Wasserbasislackschicht und die Klarlackschicht in einem Umluftofen während 68 Minuten bei 150°C gehärtet, wodurch ein mit einer Mehrschichtlackierung beschichtetes Substrat entsteht, wobei die oberste Schicht der Mehrschichtlackierung eine überbrannte Klarlackschicht ist.

Anschließend wurde der Wasserbasislack 1 beziehungsweise E1 bis E4 auf die oben beschriebene Originallackierung (Mehrschichtlackierung) in einer Trockenfilmschichtdicke von etwa 25 µm appliziert. Nach 4 Minuten Ablüften des Basislacks bei Raumtemperatur wurde über 10 Minuten bei 70 °C im Umluftofen zwischengetrocknet. Auf die zwischengetrocknete Wasserbasislackschicht wurde der Zweikomponentenklarlack Igloss® der Firma BASF Coatings GmbH in einer Trockenfilmschichtdicke von etwa 40 µm appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet, wodurch eine mehrschichtige Lackierung entsteht.

Die so erhaltenen Mehrschichtlackierungen wurden hinsichtlich der Gitterschnitthaftung untersucht. Dazu wurde der Gitterschnitt nach DIN EN ISO 2409:2013-6 durchgeführt. Die Beurteilung der Ergebnisse des Gitterschnitttests wurde nach DIN EN ISO 2409:2013-6 durchgeführt. Niedrige Ergebniswerte bedeuten eine verbesserte Haftung.

Die Ergebnisse finden sich in der Tabelle 1.

**Tabelle 1: Gitterschnittbeständigkeit der Aufbauten aus Wasserbasislack 1 und E1 bis E4**

| **WBL-Aufbau** | **Gitterschnittergebnis** | **Beurteilung** |
|---|---|---|
| 1 | 5 | nicht in Ordnung |
| E1 | 0 | in Ordnung |
| E2 | 1 | in Ordnung |
| E3 | 0 | in Ordnung |
| E4 | 0 | in Ordnung |

Die Ergebnisse untermauern, dass der Einsatz spezieller Carbonsäuren in Wasserbasislacken die Gitterschnittbeständigkeit (das heißt die Zwischenschichthaftung) im Vergleich zum Wasserbasislack 1 deutlich erhöht.

## Patentansprüche

1. Verwendung von aromatischen und araliphatischen Carbonsäuren in wässrigen Basislacken zur Verbesserung der Haftung dieser Lacke auf überbrannten Klarlacken.

2. Verwendung nach Anspruch 1, **dadurch gekennzeichnet, dass** die organischen Carbonsäuren Monocarbonsäuren sind.

3. Verwendung nach Anspruch 1 oder 2, **dadurch gekennzeichnet, dass** die Basislacke 0,1 bis 5 Gew.-% aromatische und/oder araliphatische Carbonsäuren, bezogen auf die Gesamtmenge des jeweiligen wässrigen Basislacks, enthalten.

4. Verwendung nach Anspruch 1 bis 3, **dadurch gekennzeichnet, dass** die Basislacke 0,3 bis 1,5 Gew.-% aromatische und/oder araliphatische Carbonsäuren, bezogen auf die Gesamtmenge des jeweiligen wässrigen Basislacks, enthalten.

5. Verwendung nach Anspruch 1 bis 4, **dadurch gekennzeichnet, dass** die Carbonsäuren 7 bis 15, bevorzugt 7 bis 8 Kohlenstoffatome enthalten.

6. Verwendung nach Anspruch 1 bis 5, **dadurch gekennzeichnet, dass** die Basislacke mindestens ein hydroxyfunktionelles Polymer als Bindemittel ausgewählt aus der Gruppe bestehend aus Polyurethanen, Polyestern, Poly(meth)acrylaten und/oder Mischpolymerisaten der genannten Polymere enthalten.

7. Verfahren zur Herstellung einer mehrschichtigen Lackierung auf einem Substrat, bei dem
(1) ein mit einer gehärteten Mehrschichtlackierung beschichtetes Substrat bereitgestellt wird, wobei die oberste Schicht der Mehrschichtlackierung eine überbrannte Klarlackschicht ist,
(2) ein wässriger Basislack enthaltend mindestens eine aromatische und/oder araliphatische Carbonsäure direkt auf die überbrannte Klarlackschicht aus (1) aufgebracht wird und aus dem aufgebrachten Basislack ein Polymerfilm gebildet wird,
(3) auf die unter (2) erhaltene Basislackschicht ein Klarlack aufgebracht wird und anschließend
(4) die Basislackschicht aus (2) und die Klarlackschicht aus (3) zusammen gehärtet werden.

8. Verfahren nach Anspruch 7, **dadurch gekennzeichnet, dass** das Verfahren ferner eine Stufe (2a) zwischen den Stufen (2) und (3) umfasst, in der direkt auf die unter (2) erhaltene Basislackschicht mindestens ein weiterer Basislack aufgebracht wird und aus diesem mindestens einen weiteren Basislack ein Polymerfilm gebildet wird, wobei dann in Stufe (3) direkt auf die eine oder die oberste in Stufe (2a) hergestellte Basislackschicht ein Klarlack aufgebracht wird und anschließend in Stufe (4) die Basislackschichten aus (2) und (2a) und die Klarlackschicht aus (3) zusammen gehärtet werden.

9. Verfahren nach Anspruch 7 oder 8, **dadurch gekennzeichnet, dass** das Substrat ein Metall- oder Kunststoffsubstrat ist.

10. Verfahren nach Anspruch 8 bis 9, **dadurch gekennzeichnet, dass** die überbrannte Klarlackschicht aus Stufe (1) die oberste Schicht einer Mehrschichtlackierung, die Fehlstellen aufweist, darstellt.

11. Mehrschichtige Lackierung auf einem Substrat, welche nach einem Verfahren gemäß Anspruch 7 bis 10 hergestellt wurde.

## Claims

1. Use of aromatic and araliphatic carboxylic acids in aqueous basecoat materials for the purpose of improving the adhesion of these coating materials to overbaked clearcoat materials.

2. Use according to Claim 1, **characterized in that** the organic carboxylic acids are monocarboxylic acids.

3. Use according to Claim 1 or 2, **characterized in that** the basecoat materials contain 0.1 to 5 wt% of aromatic and/or araliphatic carboxylic acids, based on the total amount of the respective aqueous basecoat material.

4. Use according to Claim 1 to 3, **characterized in that** the basecoat materials contain 0.3 to 1.5 wt% of aromatic and/or araliphatic carboxylic acids, based on the total amount of the respective aqueous basecoat material.

5. Use according to Claim 1 to 4, **characterized in that** the carboxylic acids contain 7 to 15, preferably 7 to 8 carbon atoms.

6. Use according to Claim 1 to 5, **characterized in that** the basecoat materials comprise at least one hydroxy-functional polymer as binder selected from the group consisting of polyurethanes, polyesters, poly(meth)acrylates and/or copolymers of the stated polymers.

7. Method for producing a multicoat paint system on a substrate, where
(1) a substrate coated with a cured multicoat paint system is provided, the topmost coat of the multicoat paint system being an overbaked clearcoat film,
(2) an aqueous basecoat material comprising at least one aromatic and/or araliphatic carboxylic acid is applied directly to the overbaked clearcoat film from (1), and a polymer film is formed from the applied basecoat material,
(3) a clearcoat material is applied to the basecoat film obtained under (2), and then
(4) the basecoat film from (2) and the clearcoat film from (3) are cured together.

8. Method according to Claim 7, **characterized in that** the method further comprises a stage (2a) between the stages (2) and (3), in which directly atop the basecoat film obtained under (2) at least one further basecoat material is applied and a polymer film is formed from this at least one further basecoat material, with a clearcoat material then being applied in stage (3) directly atop the basecoat film or the topmost basecoat film produced in stage (2a), and subsequently, in stage (4), the basecoat films from (2) and (2a) and the clearcoat film from (3) are cured together.

9. Method according to Claim 7 or 8, **characterized in that** the substrate is a metallic or plastics substrate.

10. Method according to Claim 8 to 9, **characterized in that** the overbaked clearcoat film from stage (1) represents the topmost coat of a multicoat paint system exhibiting defects.

11. Multicoat paint system on a substrate, produced by a method according to Claim 7 to 10.

## Revendications

1. Utilisation d'acides carboxyliques aromatiques et araliphatiques dans des vernis de base aqueux pour améliorer l'adhésion de ces vernis sur des vernis transparents surcuits.

2. Utilisation selon la revendication 1, **caractérisée en ce que** les acides carboxyliques organiques sont des acides monocarboxyliques.

3. Utilisation selon la revendication 1 ou 2, **caractérisée en ce que** les vernis de base contiennent 0,1 à 5 % en poids d'acides carboxyliques aromatiques et/ou araliphatiques, par rapport à la quantité totale du vernis de base aqueux respectif.

4. Utilisation selon les revendications 1 à 3, **caractérisée en ce que** les vernis de base contiennent 0,3 à 1,5 % en poids d'acides carboxyliques aromatiques et/ou araliphatiques, par rapport à la quantité totale du vernis de base aqueux respectif.

5. Utilisation selon les revendications 1 à 4, **caractérisée en ce que** les acides carboxyliques contiennent 7 à 15, de préférence 7 à 8 atomes de carbone.

6. Utilisation selon les revendications 1 à 5, **caractérisée en ce que** les vernis de base contiennent au moins un polymère à fonction hydroxy en tant que liant, choisi dans le groupe constitué par les polyuréthanes, les polyesters, les poly(méth)acrylates et/ou les copolymères des polymères mentionnés.

7. Procédé de fabrication d'un vernissage multicouche sur un substrat, selon lequel
(1) un substrat revêtu avec un vernissage multicouche durci est mis à disposition, la couche la plus supérieure du vernissage multicouche étant une couche de vernis transparent surcuit,
(2) un vernis de base aqueux contenant au moins un acide carboxylique aromatique et/ou araliphatique est appliqué directement sur la couche de vernis transparent surcuit de (1), et un film polymère est formé à partir du vernis de base appliqué,
(3) un vernis transparent est appliqué sur la couche de vernis de base obtenue en (2), puis
(4) la couche de vernis de base de (2) et la couche de vernis transparent de (3) sont durcies ensemble.

8. Procédé selon la revendication 7, **caractérisé en ce que** le procédé comprend en outre une étape (2a) entre les étapes (2) et (3), lors de laquelle au moins un vernis de base supplémentaire est appliqué directement sur la couche de vernis de base obtenue en (2), et un film polymère est formé à partir de ce au moins un vernis de base supplémentaire, un vernis transparent étant ensuite appliqué à l'étape (3) directement sur la couche de vernis de base ou la couche de vernis de base la plus supérieure fabriquée à l'étape (2a), puis, à l'étape (4), les couches de vernis de base de (2) et (2a) et la couche de vernis transparent de (3) étant durcies ensemble.

9. Procédé selon la revendication 7 ou 8, **caractérisé en ce que** le substrat est un substrat en métal ou en matière plastique.

10. Procédé selon les revendications 8 à 9, **caractérisé en ce que** la couche de vernis transparent surcuit de l'étape (1) constitue la couche la plus supérieure d'un vernissage multicouche qui présente des défauts.

11. Vernissage multicouche sur un substrat, qui a été fabriqué par un procédé selon les revendications 7 à 10.
